(19) **Europäisches Patentamt**

**European Patent Office**

**Office européen des brevets**

(11) **EP 1 066 558 B1**

(12) **EUROPEAN PATENT SPECIFICATION**

(45) Date of publication and mention
of the grant of the patent:
**29.01.2003 Bulletin 2003/05**

(21) Application number: **99910055.5**

(22) Date of filing: **25.03.1999**

(51) Int Cl.[7]: **G06F 7/72**

(86) International application number:
**PCT/CA99/00254**

(87) International publication number:
**WO 99/049386 (30.09.1999 Gazette 1999/39)**

(54) **ACCELERATED FINITE FIELD OPERATIONS ON AN ELLIPTIC CURVE**

**BESCHLEUNIGTE BEGRENZTES-FELD-OPERATIONEN AUF EINER ELLIPTISCHEN KURVE**

**OPERATIONS ACCELEREES DANS LE CORPS DE GALOIS SUR UNE COURBE ELLIPTIQUE**

(84) Designated Contracting States:
**CH DE FR GB LI**

(30) Priority: **25.03.1998 US 47518**

(43) Date of publication of application:
**10.01.2001 Bulletin 2001/02**

(73) Proprietor: **Certicom Corp.**
**Mississauga, Ontario L4W 5L1 (CA)**

(72) Inventors:
• **VANSTONE, Scott, A.**
**Waterloo, Ontario N2T 2H4 (CA)**
• **MULLIN, Ronald, C.**
**Waterloo, Ontario N2L 4R9 (CA)**
• **ANTIPA, Adrian**
**Mississauga, Ontario L4Z 3R3 (CA)**
• **GALLANT, Robert**
**Mississauga, Ontario L5M 5N1 (CA)**

(74) Representative:
**Raimondi, Alfredo, Dott. Ing. Prof.**
**Dott. Ing. Prof. Alfredo Raimondi S.r.l.,**
**Piazza le Cadorna 15**
**20123 Milano (IT)**

(56) References cited:
**EP-A- 0 874 307**        **WO-A-96/04602**

• **MENEZES A J ET AL: "ELLIPTIC CURVE CRYPTOSYSTEMS AND THEIR IMPLEMENTATION" JOURNAL OF CRYPTOLOGY, vol. 6, no. 4, 1 January 1992 (1992-01-01), pages 209-224, XP002069135 cited in the application**
• **AGNEW G B ET AL: "AN IMPLEMENTATION OF ELLIPTIC CURVE CRYPTOSYSTEMS OVER F2155" IEEE JOURNAL ON SELECTED AREAS IN COMMUNICATIONS, vol. 11, no. 5, 1 June 1993 (1993-06-01), pages 804-813, XP000399849**
• **KENJI KOYAMA ET AL: "A SIGNED BINARY WINDOW METHOD FOR FAST COMPUTING OVER ELLIPTIC CURVES" IEICE TRANSACTIONS ON FUNDAMENTALS OF ELECTRONICS, COMMUNICATIONS AND COMPUTER SCIENCES, vol. E76 - A, no. 1, 1 January 1993 (1993-01-01), pages 55-61, XP000358858 ISSN: 0916-8508**

**Description**

This invention relates to a method of accelerating operations in a finite field, and in particular, to operations performed in a field $F_{2m}$ such as used in encryption systems.

**BACKGROUND OF THE INVENTION**

Finite fields of characteristic two in $F_{2m}$ are of interest since they allow for the efficient implementation of elliptic curve arithmetic. The field $F_{2m}$ can be viewed as a vector space of dimension $m$ over $F_2$. Once a basis of $F_{2m}$ over $F_2$ has been chosen the elements of $F_{2m}$ can be conveniently represented as vectors of elements zero or one and of length $m$. In hardware, a field element is stored in a shift register of length $m$. Addition of field elements is performed by bitwise XOR-ing ($\oplus$) the vector representations and takes one clock cycle.

Digital signatures are used to confirm that a particular party has sent a message and that the contents have not been altered during transmission.

A widely used set of signature protocols utilizes the ElGamal public key signature scheme that signs a message with the sender's private key. The recipient may then verify the signature with the sender's public key.

Various protocols exist for implementing such a scheme and some have been widely used. In each case however the recipient is required to perform a computation to verify the signature. Where the recipient has adequate computing power this does not present a particular problem but where the recipient has limited computing power, such as in a "Smart card " application, the computations may introduce delays in the verification process. Public key schemes may be implemented using one of a number of groups in which the discrete log problem appears intractable but a particularly robust implementation is that utilizing the characteristics of points on an elliptic curve over a finite field. This implementation has the advantage that the requisite security can be obtained with relatively small orders of field compared with for example with implementations in $Z_p{}^*$ and therefore reduces the bandwidth required for communicating the signatures.

In a typical implementation a signature component s has the form:

$$s = ae + k \ (\text{mod } n)$$

where:

P is a point on the curve, which is a predefined parameter of the system;
k is a random integer selected as a short term private or session key, and has a corresponding short term public key R = kP;
a is the long term private key of the sender and has a corresponding public key aP = Q;
e is a secure hash, such as the SHA hash function, of a message m and short term public key R; and
n is the order of the curve.

The sender sends to the recipient a message including m, s, and R and the signature is verified by computing the value $R' = (sP - eQ)$ which should correspond to R. If the computed values are equivalent then the signature is verified.

In order to perform the verification it is necessary to compute a number of point multiplications to obtain sP and eQ, each of which is computationally complex.

If $F_q$ is a finite field, then elliptic curves over $F_q$ can be divided into two classes, namely supersingular and non-supersingular curves. If $F_q$ is of characteristic 2, i.e. $q = 2^M$, then the classes are defined as follows.

i) The set of all solutions to the equation $y^2 + ay = x^3 + bx + c$ where $a, b, c \in F_q$, $a \neq 0$, together with a special point called the point at infinity O is a supersingular curve over $F_q$.
ii) The set of all solutions to the equation $y^2 + xy = x^3 + ax^2 + b$ where $a, b \in F_q$, $b \neq 0$, together with a special point called the point at infinity O is a nonsupersingular curve over $F_q$.

By defining an appropriate addition on these points, we obtain an additive abelian group. The addition of two points $P(x_1, y_1)$ and $Q(x_2, y_2)$ for the supersingular elliptic curve E with $y^2 + ay = x^3 + bx + c$ is given by the following:-

If $P = (x_1, y_1) \in E$; then define $-P = (x_1, y_1 + a), P + O = O + P = P$ for all $P \in E$.
If $Q = (x_2, y_2) \in E$ and $Q \neq -P$, then the point representing the sum of $P + Q$, is denoted $(x_3, y_3)$, where

$$x_3 = \left\{ \left( \frac{y_1 \oplus y_2}{x_1 \oplus x_2} \right)^2 \oplus x_1 \oplus x_2 \; (P \neq Q) \right.$$

or

$$x_3 = \left\{ \frac{x_1^4 \oplus b^2}{a^2} \qquad (P = Q) \right.$$

and

$$y_3 = \left\{ \left( \frac{y_1 \oplus y_2}{x_1 \oplus x_2} \right) \oplus (x_1 \oplus x_3) \oplus y_1 \oplus a \qquad (P \neq Q) \right.$$

or

$$y_3 = \left\{ \left( \frac{x_1^2 \oplus b}{a} \right) \oplus (x_1 \oplus x_3) \oplus y_1 \oplus a \qquad (P = Q) \right.$$

The addition of two points $P(x_1,y_1)$ and $Q(x_2,y_2)$ for the nonsupersingular elliptic curve $y^2 + xy = x^3 + ax^2 + b$ is given by the following:-

If $P=(x_1,y_1) \in E$ then define $- P=(x_1,y_1+ x_1)$. For all $P \in E$, $O+P=P+O=P$. If $Q=(x_2,y_2) \in E$ and $Q \neq -P$, then $P + Q$ is a point $(x_3,y_3)$, where

$$x_3 = \left\{ \left( \frac{y_1 \oplus y_2}{x_1 \oplus x_2} \right)^2 \oplus \frac{y_1 \oplus y_2}{x_1 \oplus x_2} \oplus x_1 \oplus x_2 \oplus a \qquad (P \neq Q) \right.$$

or

$$x_3 = \left\{ x_1^2 \oplus \frac{b}{x_1^2} \qquad (P = Q) \right.$$

]and

$$y_3 = \left\{ \left( \frac{y_1 \oplus y_2}{x_1 \oplus x_2} \right) \oplus (x_1 \oplus x_3) \oplus x_3 \oplus y_1 \qquad (P \neq Q) \right.$$

or

$$y'_3 = \left\{ x_1^2 \oplus \left( x_1 \oplus \frac{y_1}{x_1} \right) \oplus x_3 \oplus x_3 \right. \qquad (P=Q)$$

Now supersingular curves are preferred, as they are more resistant to the MOV attack. It can be seen that computing the sum of two points on $E$ requires several multiplications, additions, and inverses in the underlying field $F_{2m}$. In turn, each of these operations requires a sequence of elementary bit operations.

When implementing cryptographic operations in ElGamal or Diffie-Hellman schemes or generally most cryptographic operations with elliptic curves, one is required to compute $kP = P + P + ... + P$ ($P$ added $k$ times) where $k$ is a positive integer and $P \in E$. This requires the computation of $(x_3, y_3)$ to be computed k-1 times. For large values of k which are typically necessary in cryptographic applications, this has previously been considered impractical for data communication. If $k$ is large, for example 1024 bits, $kP$ would be calculated by performing $2^{1024}$ additions of $P$.

Furthermore, in a multiplicative group, multiplications and inversions are extremely computationally intensive, with field inversions being more expensive than field multiplications. The inversion operation needed when adding two points can be eliminated by resorting to projective coordinates. The formula for addition of two points however, requires a larger number of multiplications than is required when using affine coordinates.

In a paper entitled "Elliptic Curve Cryptosystems and Their Implementation" by Vanstone et al., published in The Journal of Cryptology, a method is described for adding two points by converting to projective coordinates and thus eliminating the inversion computation. However, the overall gain in speed by elimination of the inversion is at the expense of space. Extra registers are required to store P and Q and also to store intermediate results when doing the addition. Furthermore, this method requires the use of the y-coordinate in the calculation.

Further exemples of the prior art solutions and of the related problems are disclosed into: "IEEE Journal on selected areas in communication, vol 11-n° 5 1 June 1993" and into WO-A-96 04602.

In these documents, the use of homogeneous coordinates (or projective coordinates) avoids inversion at each addition,.

Let E be an elliptic curves over $F_{2m}$ having equation $y^2 + xy = x^3 + ax^2 + b$ where $a, b \in F_{2m}$, $b \neq O$.

We can view E as the set of all points in $P^2(F_{2m})$ which satisfy the cubic equation $y^2 z + xyz = x^3 + ax^2 z + bz^3$.

Recall that denotes the projective plane over $P^2(F_{2m})$ and the point $(0, 1, 0)$ represents the identity O in E. To derive the addition formulas for the elliptic curve with this representation, we take points $P = (x_1, y_1, z_1)$ and $Q = (x_2, y_2, z_2)$, normalise each to $(x_1/z_1, y_1/z_1, 1), (x_2/z_2, y_2/z_2, 1)$, and apply the previous addition formulas.

If $P = (x_1, y_1, z_1)$, $Q = (x_2, y_2, z_2)$, $P, Q \neq O$. and $P \neq -Q$, then $P + Q = (x_3, y_3, z_3)$ where, if $P \neq Q$. then

$$x_3 = AD$$

$$y_3 = CD + A^2(Bx_1 + Ay_1)$$

$$z_3 = A^3 z_1 z_2$$

where $A = x_2 z_1 + x_1 z_2$, $B = y_2 z_1 + y_1 z_2$, $C = A + B$ and $D = A^2(A + az_1 z_2) + z_1 z_2 BC$.

In the case of P = Q, then

$$x_3 = AB$$

$$y_3 = x_1^4 A + B(x_1^2 + y_1 z_1 A)$$

$$z_3 = A^3$$

where $A = x_1 z_1$ and $B = bz_1^4 + x_1^4$. Computing kP using the version of the double-add method where we always double the accumulator and add in the point P when necessary, we can assume that $z_2 = 1$ in the previous formulas.

One can then see that computing P + Q, P ≠ Q. requires 13 field multiplications, and 2P requires 7 muliplications.

EP-A-0 874 307 represents a prior art document according to Art 54(3) EPC only.

## SUMMARY OF THE INVENTION

It is therefore an object of the present invention to provide a method and apparatus in which some of the above disadvantages are obviated or mitigated.

The method of the invention is defined in independent claim 1. Further embodiments of the invention are specified in the appended dependent claims.

## BRIEF DESCRIPTION OF THE DRAWINGS

Embodiments of the present invention will now be described by way of example only with reference to the accompanying drawings in which: -

Figure 1 is a schematic representation of a data communication system;

Figure 2 is a schematic diagram of an encryption/decryption unit;

Figure 3 is a flow chart according to EP 0 874 307 in the name of the same applicant for computing a multiple of a point;

## DETAILED DESCRIPTION OF A PREFERRED EMBODIMENT

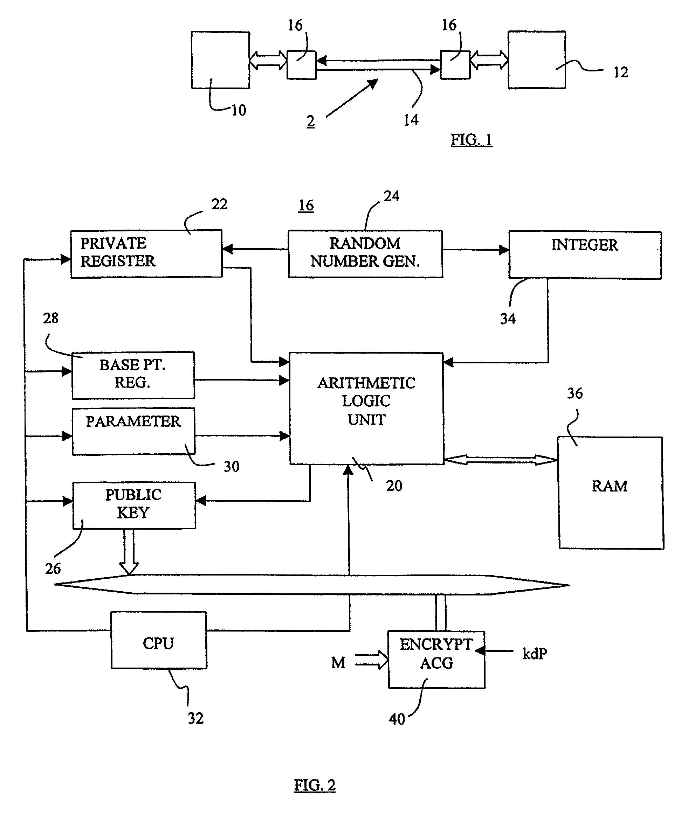

Referring to Figure 1, a data communication system 2 includes a pair of correspondents, designated as a sender 10, and a recipient 12, connected via a communication channel 14. Each of the correspondents 10, 12 includes an encryption/decryption unit 16 associated therewith that may process digital information and prepare it for transmission through the channel 14 as will be described below. The encryption/decryption units implement amongst, others key exchange protocols and an encryption/decryption algorithm.

The module 16 is shown schematically in Figure 2 and includes an arithmetic logic unit 20 to perform the computations including key exchange and generation. A private key register 22 contains a private key, d, generated for example as a 155 bit data string from a random number generator 24, and used to generate a public key stored in a public key register 26. A base point register 28 contains the co-ordinates of a base point P that lies in the elliptic curve selected with each co-ordinate (x, y), represented as a 155 bit data string. Each of the data strings is a vector of binary digits with each digit being the coefficient of an element of the finite field in the normal basis representation of the coordinate.

The elliptic curve selected will have the general form $y^2 + xy = x^3 + ax^2 + b$ and the parameters of that curve, namely the coefficients a and b are stored in a parameter register 30. The contents of registers 22, 24, 26, 28, 30 may be transferred to the arithmetic unit 20 under control of a CPU 32 as required.

The contents of the public key register 26 are also available to the communication channel 14 upon a suitable request being received. In the simplest implementation, each encryption module 16 in a common secure zone will operate with the same curve and base point so that the contents of registers 28 and 30 need not be accessible. If further sophistication is required, however, each module 16 may select its own curve and base point in which case the contents of registers 28, 30 have to be accessible to the channel 14.

The module 16 also contains an integer register 34 that receives an integer k, the session seed, from the generator 24 for use in encryption and key exchange. The module 16 has a random access memory (RAM) 36 that is used as a temporary store as required during computations.

In accordance with a general embodiment, the sender assembles a data string, which includes amongst others, the public key Q of the sender, a message m, the senders short term public key R and a signature component s of the sender. When assembled the data string is sent over the channel 4 to the intended recipient 12.

For simplicity it will be assumed that the signature component s of the sender 12 is of the form s = ae + k (mod n) as discussed above although it will be understood that other signature protocols may be used. To verify the signature sP-eQ must be computed and compared with R.

Thus a first step of the recipient is to retrieve the value of Q from the string. A hash value e may also be computed from the message m and the coordinates of the point R. The recipient is then able to perform the verification by computing sP and eQ.

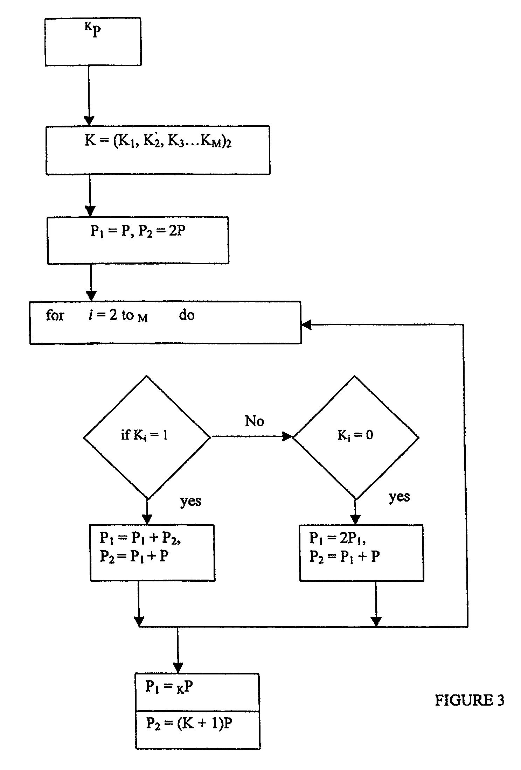

In order to accelerate the calculation of sP or eQ the recipient may adopt the following to calculate the coordinates of the new point sP, in order to avoid performing the several multiplications, additions and inverses in the underlying field $F_2{}^m$. The recipient may calculate sP by resorting to the expedient of a "double and add" method as shown in figure 3.

Referring to figure 3 one embodiment of a method described into EP 0 874 037 illustrating a "double and add" method for multiplication a point *P* on an elliptic curve *E* by a value *k* in order to derive a point *kP* is implemented by initially representing *k* in its binary form. Next a successive series of point pairs (m*P*, (m+1)*P*) are set up. Each successive digit of *k* is considered in turn, upon the occurrence of a zero value digit in the binary representation of *k*, the first of the pair of points is doubled and one is added to the second of the pair of points i.e compute (2m*P*,(2m+1)P) from (m*P*,(m+1)P). Alternatively upon the occurrence of a one value in the binary representation of *k*, the first of the pair is formed from the sum of the previous pair of points and the second of the pair is formed by adding one to the first of the pair i.e. compute ((2m+1)P,(2m+2)P) from (m*P*,(m+1)P).

This is illustrated in the following short example: in which *k* = 23. The value of *k* may be represented in binary as pairs (11011). Applying the above rule to a pair of points *(P, 2P)* we get the successive sequence of point, *(2P, 3P)*; *(5P, 6P)*; *(11P, 12P)*; and finally *(23P, 24P)*. The first of the pair is thus the required point.

Thus, it may be seen the final result *23P* is obtained by performing a series of "double and add" operations on a pair of points in the field wherein the pair of points in a given pair differ by P. Furthermore the number of "double and add" operations equals at most one less than the number of bits in *k* i.e. (*m* - 1) times. This method of "double and add" has a distinct advantage for large values of *k* in reducing the number of operations to be performed by a processor.

Turning back to the calculation of sP and eQ, the recipient may thus apply the above embodiment to calculating sP for the nonsupersingular elliptic curve $y^2 + xy = x^3 + ax^2 + b$, E defined over $F_2{}^m$.

If $P_1 = (x_1, y_1)$ and $P_2 = (x_2, y_2)$, $P_1 \neq \pm P_2$, are points on the curve E then we can define $P_1 + P_2 = (x_3, y_3)$ where,

$$x_3 = \lambda^2 + \lambda + x_1 + x_2 + a \qquad (1)$$

wherein the slope of the curve is given by:

$$\lambda = \frac{\gamma_2 + \gamma_1}{x_2 + x_1}$$

Similarly, if $-P_2 = (x_2, y_2+x_2)$ and $P_1 - P_2 = (x_4, y_4)$ then,

$$x_4 = \bar{\lambda}^2 + \bar{\lambda} + x_1 + x_2 + a = \lambda^2 + \frac{x}{(x_1 + x_2)^2} + \lambda + \frac{x_2}{x_1 + x_2} + x_1 + x_2 + a \qquad (2)$$

where

$$\bar{\lambda} = \frac{y_2 + x_2 + y_1}{x_2 + x_1} = \frac{x_2}{x_2 + x_1} + \lambda$$

if we add $x_3$ and $x_4$ then,

$$x_3 + x_4 = \frac{x}{(x_1 + x_2)^2} + \frac{x_2}{x_1 + x_2} = \frac{x_1 x_2}{(x_1 + x_2)^2} \qquad (3)$$

To compute the x-coordinate $x_3$ of $(P_1 + P_2)$ we only need the x-coordinates of $P_1$, $P_2$ and $(P_1 - P_2)$, however the computation is not optimally efficient as it requires inversions. It may also be noted that the y-coordinate is not needed in these calculations.

Referring back to figure 2, the value *kP* may be calculated using the "double and add" method. Whenever a new pair of points is computed the addition formula of equation (3) above is used and this is done *m* times.

Thus we have a formula for $x_3$ involving $x_1$, $x_2$ and $x_4$. Unfortunately, this formula includes an inversion, which is costly. We can modify this equation as follows, suppose the values of $x_1$, $x_2$ and $x_3$ are given by $\frac{x_1}{z_1}, \frac{x_2}{z_2}, \frac{x_3}{z_3}$, where of $x_1, x_2, x_3 \, z_1, z_2, z_3$ are values maintained during the double and add algorithm. Then substituting these new representations into formula (3), we find

$$\frac{x_3}{z_3} = x_4 + \frac{\dfrac{x_1 x_2}{z_1 z_2}}{\left(\dfrac{x_1}{z_1} + \dfrac{x_2}{z_2}\right)^2} = x_4 + \frac{x_1 x_2 z_1 z_2}{(x_1 z_2 + x_2 z_1)^2} = \frac{x_4 (x_1 z_2 + x_2 z_1)^2 + x_1 x_2 z_1 z_2}{(x_1 z_2 + x_2 z_1)^2}$$

Therefore, if we take $x_3 = x_4 (x_1 z_2 + x_2 z_1)^2 + x_1 x_2 z_1 z_2$, and $z_3 = (x_1 z_2 + x_2 z_1)^2$. We can execute the "double & add" algorithm of figure 3 (using this new representation) and avoid the computation of an inversion for most of the algorithm.

From equations for $x_3$ and $z_3$ above it may be seen that $x_3$ may be calculated by performing at most four multiplication operations.

The sum of the points $P_1$ and $P_2$ are expressed in terms of $x_3$ and $z_3$ is obtained without having to perform a relatively costly inversion on the x-coordinate, and can be computed using at most four multiplies and two squares. The remaining operations of addition and squaring are relatively inexpensive with regard to computational power. The computation of the term $(x_1 z_2 + x_2 z_1)^2$ is obtained by a cyclic shift of the normal basis representation of the value within parentheses for which a general-purpose processor can perform relatively easily. At the end of the algorithm we can convert back to our original representation if required.

Referring back to figure 3, now in order to double point P $(x_1, y_1)$, let $2(x_1, y_1) = (x_3, y_3)$ then as before if the equation of the elliptic curve E is given by $y^2 + xy = x^3 + ax^2 + b$ over $F_{2^m}$, the x-coordinate of the point 2P is represented as

$$x_3 = x_1^2 + \frac{b}{x_1^2}.$$

Once again representing the coordinates in terms of the projective coordinates we obtain

$$x_3 = x_1^4 + bz_1^4$$

and

$$z_3 = (x_1 z_1)^2$$

or

$$x_3 = (x_1 + (bz_1)^4)$$

By making b relatively small the computationally expensive operations may be reduced to approximately one multiplication operation for the $z_3$ term. We can precompute $\sqrt[4]{b}$ and calculate $x_3$ according to the last equation, thus requiring two less squares. Alternatively, as mentioned earlier in a normal basis representation the computation of $x_1^4$ and $z_1^4$ is obtained by two cyclic shifts of the representation of the respective values, while $(x_1 z_1)^2$ is obtained by a single cyclic shift of the product.

Applying the earlier outlined "double and add" method of figure 3, we observe that for a scalar k of m bits and calculation of kP defined over $F_{2^m}$ requires at most (m-1) double and add operations. From the above discussion a double operation on points of an elliptic curve are achieved by performing at most two multiplication operations, while the add operation is achieved by performing at most four multiplication operations. Thus to compute the x-coordinate of kP using the method of this invention would require at most six times (m-1) multiplication operations.

Once the x values have been calculated, as above, y-coordinate values may also be determined. However, for each x-coordinate there exists at most two y-coordinates. For example, in the final step of obtaining a point 24P, both points 23P and P would be known, since 24P may be expressed as 23P + P = 24P. Assume the x-coordinate $x_{23}$ of the point A = 23P have been obtained as described earlier. Then, by substituting $x_{23}$ into the elliptic curve equation E and solving the resulting quadratic equation, two values of y are obtained corresponding to points A = $(x_{23}, y_{23}^{(1)})$ and B = $(x_{23}, y_{23}^{(2)})$. Next, by substitution, the x-coordinate $x_{24}$ obtained through calculating 24P = P + 23P into the elliptic curve equation will produce two points $(x_{24}, y_{24}^{(1)})$ and $(x_{24}, y_{24}^{(2)})$. The two points thus obtained are stored. To the point A + B are added, point P using ordinary point addition to produce corresponding points A + P = $(x_a, y_a)$ and

$B + P = (x_b, y_b)$, respectively. Point $(x_a, y_a)$ is compared to points $(x_{24}, y_{24}^{(1)})$ and $(x_{24}, y_{24}^{(2)})$, respectively. If none of the points match, then $(x_b, y_b)$ is the correct point, otherwise $(x_a, y_a)$ is the correct point. Thus, it may be seen that multiples of a point P may be easily calculated without knowing the y-coordinate and, furthermore, the y-coordinate may be obtained at the end of the calculation, if so desired.

Thus, for example referring back to the ElGamal scheme for elliptic curves one is required to compute $r = kP =(x,y)$. In this case one can drop the y-coordinate and produce a hash of a message m and the x-coordinate $e = h(m// x)$. The sender then sends to a recipient a message including a signature s and the hash e. The signature s has the form $s = (de + k) \bmod n$, where d is the private key of the sender and k is a random number generated by the sender. The recipient then verifies the signature by calculating $sP - eQ = r$. Both sP and eQ may be calculated by utilizing the "double and add" method of this invention. The x values of sP and eQ each produce two possible values of y: $(x_1, y_1^{(1)})$, $(x_1, y_1^{(2)})$ and $(x_2, y_2^{(1)})$, $(x_2, y_2^{(2)})$ when substituted back into the elliptic curve equation E. When the point subtraction is performed between permutations of these points, the correct y will thus produce the appropriate matching r. If none of these substitutions produce a matching r, then the signature is not verified.

An embodiment of the invention for computing scalar multiples of an elliptic curve point in $F_p$ or $F_2m$ is described below. Consider the generalized elliptic curve equation $E : y^2 + xy = x^3 + ax^2 + b,\ b \neq 0$ over $F_2m$.

If $P=(x_1,y_1)$ is a generator, then using the method as described with respect to figure 3 and projective coordinates, we get $kP$, $(k+1)P$ where $k$ is the scalar and $kP=(X_2,Z_2)$, $(k+1)P=(X_3,Z_3)$.

Our objective is to determine the affine coordinates of $kP=(x_2,y_2)$. We know, of course, that $x_2 = \dfrac{X_2}{Z_2}$.

Suppose the affine coordinates of $(k+1)P=(x_3,y_3)$.

Then, $x_3 = \lambda^2 + \lambda + x_1 + x_2 + a,\ \lambda = \dfrac{y_1 + y_2}{x_1 + x_2}$

$$\lambda^2 + \lambda + (x_1 + x_2) + a = \frac{y_1^2 + y_2^2 + (x_1 + x_2)(y_1 + y_2) + (x_1 + x_2)^3 + a(x_1 + x_2)^2}{(x_1 + x_2)^2}$$

$$= \{y_2^2 + x_1 y_2 + x_2 y_1 + x_2 y_2 + x_1^2 x_2 + x_1 x_2^2 + x_2^3 + a x_2^2\}\frac{1}{(x_1 + x_2)^2}$$

$$= \frac{\{b + b + x_1 y_2 + x_2 y_1 + x_1^2 x_2 + x_1 x_2^2\}}{(x_1 + x_2)^2}$$

$$= \frac{x_1 y_2 + x_2 y_1 + x_2^2 x_1 + x_1^2 x_2}{(x_1 + x_2)^2}$$

$$= \frac{x_1 y_2 + x_2 y_1 + x_1 x_2(x_1 + x_2)}{(x_1 + x_2)^2}$$

Solving for $y_2$ we get

$$y_2 = \frac{1}{x_1}\left\{x_3(x_1 + x_2)^2 + x_2 y_1 + x_1 x_2(x_1 + x_2)\right\} \qquad (*)$$

We know $x_1$ and $y_1$ but must compute

$$x_2 = \frac{X_2}{Z_2} \text{ and } x_3 = \frac{X_3}{Z_3}.$$

These require two inversions and two multiplications.

Rewriting gives

$$y_2 = (x_1 + x_2)\left\{\frac{1}{x_1}[X_3(x_1 + x_2) + y_1] + x_2\right\} + y_1$$

$$= (x_1 + x_2)\left\{\frac{1}{x_1 Z_3}[X_3(x_1 + x_2) + Z_3 y_1] + x_2\right\} + y_1$$

To compute this quantity requires inverting $x_1 Z_{3.}$ and $Z_2$ and then 4 multiplies.

Since $x_1 Z_3$ costs one multiply, the total is 2 inversions and 5 multiplies.

The Odd Characteristic Case:

$$E : y^2 = x^3 + ax + b$$

$$x_3 = \lambda^2 - x_1 - x_2 \qquad \lambda = \frac{y_2 - y_1}{x_2 - x_1}$$

$$x_3 = \left(\frac{y_2 - y_1}{x_2 - x_1}\right) - x_1 - x_2$$

$$= \frac{y_2^2 - 2y_1 y_2 + y_1^2 - (x_1 + x_2)(x_2 - x_1)^2}{(x_2 - x_1)^2}$$

$$= y_2^2 - 2y_1 y_2 + y_1^2 - (x_1 + x_2)(x_2^2 - 2x_1 x_2 + x_1^2)$$

$$= y_2^2 - 2y_1 y_2 - x_1 x_2^2 + 2x_1^2 x_2 - x_2^3 + 2x_1 x_2^2 - x_2 x_1^2$$

$$= \frac{ax_2 + b + ax_1 + b - 2y_1 y_2 - x_1 x_2^2 + x_1^2 x_2 + 2x_1 x_2^2}{(x_2 - x_1)}$$

Solving to $y_2$ gives:

$$2y_1 y_2 = -x_3(x_2 - x_1)^2 + ax_2 + 2b + ax_1 + x_1 x_2^2 + x_1^2 x_2$$

or

$$y_2 = \frac{1}{2y_1}\left\{-x_3(x_2 - x_1)^2 + a(x_2 + x_1) + 2b + x_1 x_2(x_1 + x_2)\right\}$$

$$= \frac{1}{2y_1}\left\{(x_1 + x_2) + (a + x_1 x_2) - x_3(x_2 - x_1)^2\right\}$$

Replacing $x_3$ we get:

$$x_2 = \frac{X_2}{Z_2}$$

$$y_2 = \frac{1}{2y_1 Z_3}\left\{Z_3(x_1 + x_2)(a + x_1 x_2) - X_2(x_2 - x_1)^2\right\}$$

Similarly, in the field *Fp,*

$$y^2 = x^3 + ax + b$$

$$x_3 = \lambda^2 - x_1 - x_2$$

$$y_3 = \lambda(x_1 - x_3) - y_1$$

$$\lambda = \frac{y_2 - y_1}{x_2 - x_1} \qquad (P2 \neq P3)$$

$$x_3 = \frac{y_2^2 - 2y_1 y_2 + y_1^2 - (x_2 - x_1)^2(x_2 + x_1)}{(x_2 - x_1)^2}$$

$$= \frac{y_2^2 - 2y_1 y_2 + y_1^2 - x_2^3 + x_1^2 x_2 + x_1 x_2^2 - x_1^3}{(x_2 - x_1)^2}$$

$$= \frac{ax_2 + b + ax_1 + b - 2y_1 y_2 + x_1 x_2(x_1 + x_2)}{(x_2 - x_1)^2}$$

$$y_2 = \frac{1}{2y_1}\left[(x_1 + x_2) \bullet (a + x_1 x_2) + 2b - x_3(x_2 - x_1)^2\right]$$

$$x_2 = X_2 \frac{1}{Z_2}, \; x_3 = X_3 \frac{1}{Z_3}$$

which means inversions plus seven multiplies or equivalently one inversion and thirteen multiplies

$$3i+7m=1i+13m$$

If we replace $x_3$, we have:

$$x_2 = X_2 \frac{1}{Z_2}$$

$$y_2 = \frac{1}{2y_1 Z_3} \bullet \left\{ Z_3 \bullet \left[ (x_1 + x_2), (a + x_1 x_2) + 2b \right] - X_3 (x_2 - x_1)^2 \right\}$$

In this case, we have two inversions plus eight multiplies or equivalently one inversion and eleven multiplies.

The present invention is thus generally concerned with an encryption method and system and particularly an elliptic curve encryption method and system in which finite field elements is multiplied in a processor efficient manner. The encryption system can comprise any suitable processor unit such as a suitably programmed general-purpose computer.

**Claims**

1.  A method of computing a public key kP from a point $P = (x_1, y_1)$ in an elliptic curve cryptosystem, P is a point on the elliptic curve, which is a predefined parameter of the system, said method comprising the steps of:

    a) computing projective X and Z coordinates of P, **characterized by** the steps of
    b) utilising the projective X and Z coordinates of P to perform successive double and add operations on P to obtain the values of:

    i) the projective X and Z coordinates $X_2$ and $Z_2$ of kP; and
    ii) the projective X and Z coordinates $X_3$ and $Z_3$ of (k+1)P;

    c) combining the values of $X_2$ and $Z_2$ to derive the affine x-coordinate $x_2$ of kP; and
    d) combining the coordinates of said point P, the derived values of $x_2$ and the projective coordinates $X_3$, $Z_3$ of (k+1)P to obtain the value of the affine y-coordinate $y_2$ of the point kP.

2.  A method according to claim 1, wherein the elliptic curve cryptosystem is defined over a field of characteristic 2.

3.  A method according to claim 2, wherein the determination of the affine y coordinate of kP is performed using the inverse of $x_1 Z_3$.

4.  A method according to claim 3, wherein the determination of the affine y coordinate of kP is performed in accordance with the formula

$$y_2 = (x_1 + x_2) \left( \frac{1}{x_1 Z_3} (X_3 (x_1 + x_2) + Z_3 y_1) + x_2 \right) + y_1.$$

5.  A method according to claim 1, wherein the elliptic curve cryptosystem is defined over a field of odd characteristic.

6.  A method according to claim 5, wherein the determination of the affine y coordinate of kP is performed using the inverse of $Z_3$.

7.  A method according to claim 6, wherein the elliptic curve is associated with a pair of parameters *a* and *b,* and the determination of the affine y coordinate of kP is performed in accordance with the formula

$$y_2 = \frac{1}{2y_1} \left( (x_1 + x_2)(a + x_1 x_2) + 2b - x_3 (x_2 - x_1)^2 \right).$$

8.  A method according to claim 5, wherein the determination of the affine y coordinate of kP is performed using the

inverse of $y_1Z_3$.

9. A method according to claim 8, wherein the elliptic curve is associated with a pair of parameters *a* and *b*, and the determination of the affine y coordinate of kP is performed in accordance with the formula

$$y_2 = \frac{1}{2y_1 Z_3}\left(Z_3\left((x_1 + x_2)(a + x_1 x_2) + 2b\right) - X_3(x_2 - x_1)^2\right).$$

**Patentansprüche**

1. Verfahren zur Berechnung eines öffentlichen Schlüssels kP aus einem Punkt $P=(x_1, y_1)$ in einem Kryptosystem mit elliptischer Kurve, wobei P ein Punkt auf einer elliptischen Kurve ist, welcher einen vordefinierten Parameter des Systems darstellt, umfassend die Schritte:

   a) Berechnen projektiver X- und Z-Koordinaten von P, **gekennzeichnet durch** folgende Schritte:
   b) Verwendung der projektiven X- und Z-Koordinaten vor P, um aufeinander folgende Verdopplungs- und Additionsoperationen auf P anzuwenden, um die Werte

   i) der projektiven X- und Z-Koordinaten $X_2$ und $Z_2$ von kP; und
   ii) der projektiven X- und Z-Koordinaten $X_3$ und $Z_3$ von (k+1)P

   zu erhalten;
   c) Kombinieren der Werte $X_2$ und $Z_2$, um die affine x-Koordinate $x_2$ von kP abzuleiten; und
   d) Kombinieren der Koordinaten des Punktes P, der abgeleiteten Werte vor $x_2$ und der projektiven Koordinaten $X_3$, $Z_3$ von (k+1)P, um den Wert der affinen y-Koordinate $y_2$ des Punktes kP zu erhalten.

2. Verfahren nach Anspruch 1, bei dem das Kryptosystem mit elliptischer Kurve über einem Feld der Charakteristik 2 definiert ist.

3. Verfahren nach Anspruch 2, bei dem die Bestimmung der affinen y-Koordinate von kP unter Verwendung der Inversen von $x_1Z_3$ erfolgt.

4. Verfahren nach Anspruch 3, bei dem die Bestimmung der affinen y-Koordinate von kP gemäß der folgenden Formel erfolgt:

$$y_2 = (x_1 + x_2)\left(\frac{1}{x_1 Z_3}\left(X_3(x_1 + x_2) + Z_3 y_1\right) + x_2\right) + y_1.$$

5. Verfahren nach Anspruch 1, bei dem das Kryptosystem mit elliptischer Kurve über einem Feld mit ungerader Charakteristik erfolgt.

6. Verfahren nach Anspruch 5, bei dem die Bestimmung der affinen y-Koordinate von kP unter Verwendung der Inversen von $z_3$ erfolgt.

7. Verfahren nach Anspruch 6, bei dem der elliptischen Kurve ein Parameterpaar *a* und *b* zugeordnet wird, und die Bestimmung der affinen y-Koordinate von kP gemäß der folgenden Formel erfolgt :

$$y_2 = \frac{1}{2y_1}\left((x_1 + x_2)(a + x_1 x_2) + 2b - x_3(x_2 - x_1)^2\right).$$

8. Verfahren nach Anspruch 5, bei dem die Bestimmung der affinen y-Koordinate von kP unter Verwendung der Inversen von $y_1 Z_3$ erfolgt.

9. Verfahren nach Anspruch 8, bei dem der elliptischen Kurve ein Parameterpaar *a* und *b* zugeordnet wird, und die Bestimmung der affinen y-Koordinate von kP gemäß der folgenden Formel erfolgt:

$$y_2 = \frac{1}{2y_1 Z_3}\left(Z_3\left((x_1 + x_2)(a + x_1 x_2) + 2b\right) - X_3(x_2 - x_1)^2\right).$$

**Revendications**

1. Procédé de calcul d'une clé publique kP à partir d'un point P = $(x_1, y_1)$ dans un système cryptographique de courbe elliptique, P est un point sur la courbe elliptique, qui est un paramètre prédéterminé du système, ledit procédé comprenant les étapes de :

    a) calcul des coordonnées de projection X et Z de P, **caractérisé par** les étapes de :
    b) utilisation des coordonnées de projection X et Z de P pour réaliser des opérations de doublement et d'addition successives sur P pour obtenir les valeurs des :

        i) coordonnées de projection X et Z $X_2$ et $Z_2$ de kP ; et
        ii) coordonnées de projection X et Z $X_3$ et $Z_3$ de (k+1)P ;

    c) combinaison des valeurs de $X_2$ et $Z_2$ pour dériver les coordonnées x affine $x_2$ de kP ; et
    d) combinaison des coordonnées dudit point P, les valeurs dérivées de $x_2$ et les coordonnées de projection $X_3$, $Z_3$ de (k+1)P pour obtenir la valeur de l'ordonnée y affine $y_2$ du point kP.

2. Procédé selon la revendication 1, dans lequel le système cryptographique de courbe elliptique est défini sur un champ de caractéristique 2.

3. Procédé selon la revendication 2, dans lequel la détermination de l'ordonnée y affine de kP est réalisée en utilisant l'inverse de $x_1 Z_3$.

4. Procédé selon la revendication 3, dans lequel la détermination de l'ordonnée y affine de kP est réalisée selon la formule :

$$y_2 = (x_1 + x_2)\left(\frac{1}{x_1 Z_3}(X_3(x_1 + x_2) + Z_3 y_1) + x_2\right) + y_1.$$

5. Procédé selon la revendication 1, dans lequel le système de cryptographie de courbe elliptique est défini sur un champ de caractéristique impair.

6. Procédé selon la revendication 5, dans lequel la détermination de l'ordonnée y affine de kP est réalisée en utilisant l'inverse de $Z_3$.

7. Procédé selon la revendication 6, dans lequel la courbe elliptique est associée à une paire de paramètre *a* et *b*, et la détermination de l'ordonnée y affine de kP est réalisée selon la formule :

$$y_2 = \frac{1}{2y_1} ((x_1+x_2))(a+x_1x_2) + 2b - x_3(x_2-x_1)^2).$$

8. Procédé selon la revendication 5, dans lequel la détermination de l'ordonnée y affine de kP est réalisée en utilisant l'inverse de $y_1Z_3$.

9. Procédé selon la revendication 8, dans lequel la courbe elliptique est associée à une paire de paramètres $a$ et $b$, et la détermination de l'ordonnée y affine de kP est réalisée selon la formule :

$$y_2 = \frac{1}{2y_1Z_3} (Z_3((x_1+x_2)(a+x_1x_2)+2b)-X_3(x_2-x_1)^2).$$

FIG. 1

FIG. 2

$$^K P$$

$$K = (K_1, K_2', K_3 \ldots K_M)_2$$

$$P_1 = P, P_2 = 2P$$

for $i = 2$ to $M$ do

if $K_i = 1$ — No → $K_i = 0$

yes

yes

$$P_1 = P_1 + P_2,$$
$$P_2 = P_1 + P$$

$$P_1 = 2P_1,$$
$$P_2 = P_1 + P$$

$$P_1 = {}_K P$$

$$P_2 = (K + 1)P$$

FIGURE 3